# FASCICULE DE BREVET EUROPEEN

(11) **EP 1 130 307 B1**
(45) Date de publication et mention de la délivrance du brevet: **14.12.2005**
(21) Numéro de dépôt: 01400012.9
(22) Date de dépôt: 04.01.2001
(51) Int. Cl.: F16N 39/00, F01M 5/00

(54) **Procédé de lubrification des organes mécaniques d'un moteur diesel de véhicule et dispositif de lubrification de mise en oeuvre du procédé**
Verfahren und Einrichtung zur Schmierung einer Diesel-Brennkraftmaschine
method and system for lubrication of a diesel engine

(30) Priorité: 06.01.2000 FR 0000108
(43) Date de publication de la demande: 05.09.2001
(73) Titulaire: Peugeot Citroen Automobiles SA, 92200 Neuilly sur Seine (FR)
(72) Inventeur: Plassat, Gabriel, 92300 Levallois Perret (FR)
(74) Mandataire: De Cuenca, Emmanuel Jaime

(56) Documents cités:
- FR-A- 597 789
- US-A- 3 845 751
- US-A- 4 354 946
- US-A- 4 458 642
- US-A- 4 847 768
- PATENT ABSTRACTS OF JAPAN vol. 008, no. 132 (M-303), 20 juin 1984 (1984-06-20) & JP 59 034411 A (NISSAN JIDOSHA KK), 24 février 1984 (1984-02-24)

## Description

L'invention se rapporte à un procédé de lubrification des organes mécaniques d'un moteur Diesel de véhicule ainsi qu'à un dispositif de lubrification de mise en oeuvre du procédé.

Dans certains moteurs Diesel de véhicules, notamment à injection directe, on a constaté des fuites de carburant depuis les cylindres jusque vers le bac à huile de lubrification.

En particulier, dans le cas des véhicules équipés d'un filtre à particule, le moteur peut réaliser périodiquement des phases de post-combustion destinées à augmenter la température des gaz d'échappement, pour assurer le nettoyage du filtre. Lors des phases de post-injection, une partie du carburant vient se déposer sur les parois du cylindre. Au cours des mouvements de translation du piston, une partie de ce carburant est raclée par les segments et rejoint le bac à huile.

Cette fuite de gazole dans l'huile de lubrification peut entraîner un dysfonctionnement du moteur. En effet, le gazole ayant une viscosité inférieure à celle de l'huile, la présence de gazole dans le bac à huile fait baisser la viscosité du liquide de lubrification. La baisse de viscosité du liquide de lubrification entraîne des chutes de pression dans le circuit de lubrification du moteur ainsi que des problèmes de grippage, notamment au niveau des coussinets de paliers d'arbre à cames ou d'arbre porte-culbuteurs.

Pour résoudre ce problème, une solution consiste à augmenter la fréquence des vidanges de l'huile de lubrification. Cependant, cette solution entraîne des surcoûts dans l'entretien du véhicule.

Le document US-A-4 458 642 décrit un procédé et un dispositif de lubrification des organes mécaniques d'un moteur consistant à pomper de l'huile contenue dans un réservoir pour la faire circuler dans un circuit de lubrification, comportant une étape de chauffage de l'huile pour chauffer le moteur et séparer les impuretées tels que du carburant ; conformément aux préambules des revendications indépendantes de procédé et de dispositif.

Un but de la présente invention est de proposer un procédé de lubrification des organes mécaniques d'un moteur Diesel de véhicule, palliant tout ou partie des inconvénients de l'art antérieur relevés ci-dessus.

Ce but est atteint par le fait que le procédé selon l'invention, comporte :
- une étape de détermination de la proportion de carburant contenu dans l'huile de lubrification consistant à mesurer la concentration dudit carburant dans l'huile,
- une étape de comparaison de la proportion déterminée de carburant avec une proportion seuil, et
- une étape de chauffage de l'huile de lubrification lorsque la proportion déterminée de carburant est supérieure à la proportion seuil.

Selon une autre réalisation de l'invention, le moteur effectue au moins une étape de post-injection de carburant dans au moins certains des cylindres, l'étape de détermination de la proportion du carburant consistant à estimer la concentration dudit carburant dans l'huile en fonction du temps mesuré de post injection.

Selon d'autres particularités de l'invention:
- la proportion du carburant est estimée en fonction du temps mesuré de post injection selon la relation : Pg = αTp, dans lequel Pg est le pourcentage de gazole en masse par rapport à la masse totale d'huile, α un coefficient égal à environ 0,02, et Tp est le temps de post-injection effectuée par le moteur mesuré en minute au cours d'un cycle de fonctionnement du moteur,
- la proportion seuil de carburant est de l'ordre de 3 à 8% en masse par rapport à la masse totale d'huile,
- l'étape de réchauffage consiste à réchauffer l'huile jusqu'à une température de l'ordre de 120 à 200 degrés environ.

Un autre but de la présente invention est de proposer un dispositif de lubrification des organes mécaniques d'un moteur Diesel de véhicule de mise en oeuvre du procédé conforme à l'une ou plusieurs des caractéristiques ci-dessus, palliant tout ou partie des inconvénients de l'art antérieur, comportant un bac à huile des moyens d'aspiration de l'huile vers un circuit de lubrification, des moyens de chauffage de l'huile. Selon l'invention, le dispositif comporte en outre des moyens de détermination de la proportion de carburant contenu dans l'huile de lubrification, comportant au moins un capteur de mesure de la quantité de carburant contenue dans l'huile relié à des moyens électroniques de traitement de données, des moyens de comparaison de la proportion déterminée de carburant avec une proportion seuil déterminée, et des moyens de commande des moyens de chauffage assurant le chauffage de l'huile de lubrification lorsque la proportion déterminée de carburant est supérieure à la proportion seuil.

Selon une autre réalisation de l'invention, le moteur effectue au moins une étape de post-injection de carburant dans au moins certains des cylindres, les moyens de détermination de la proportion de carburant comportant des moyens de mesure du temps de post injection et des moyens électroniques de traitement de données assurant le calcul de la proportion de carburant contenue dans l'huile en fonction du temps mesuré de post-injection.

Selon d'autres particularités :
- les moyens de chauffage comportent au moins un système du type résistance thermique.

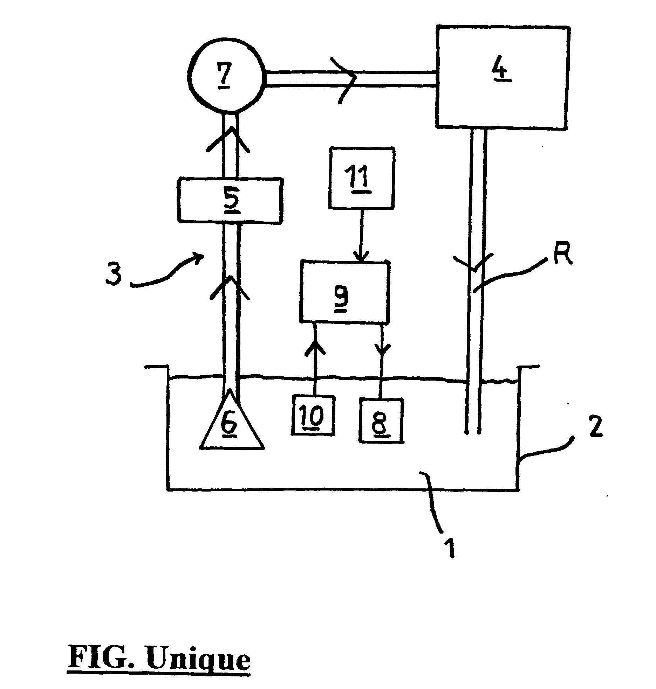

D'autres particularités et avantages apparaîtront à la lecture de la description ci-après, faite en référence à la figure unique qui représente schématiquement un dispositif de lubrification conforme à l'invention.

La figure unique illustre un système de lubrification des organes mécaniques d'un moteur, notamment d'un moteur Diesel d'un véhicule automobile. Le système comprend un bac 2 à huile disposé sous le moteur 4 et une pompe à huile 5 dont la crépine d'aspiration 6 est située dans le bac 2. L'huile 1 est pompée de façon à circuler dans un circuit de lubrification 3 du moteur 4. L'huile R ayant circulée dans le moteur 4 est récupérée par le bac 2.

Comme représenté, le circuit 3 peut comporter au moins un échangeur 7 pouvant être alimenté par un liquide de refroidissement. En particulier, les moyens échangeurs 7 peuvent comporter des moyens de commutation (non représentés) permettant de refroidir ou d'augmenter la vitesse de montée en température de l'huile de lubrification. Le dispositif de lubrification comporte également classiquement des moyens de chauffage 8 aptes à assurer le chauffage de l'huile de lubrification 1.

Selon l'invention, le dispositif comporte des moyens 10, 11 de détermination de la proportion de carburant contenue dans l'huile de lubrification. Lorsque la proportion de carburant contenue dans l'huile est supérieure à une proportion seuil déterminée, le dispositif de lubrification commande le réchauffage de l'huile 1. Le réchauffage de l'huile est réalisé de façon à provoquer l'évaporation d'au moins une partie du gazole. Les vapeurs de carburant ainsi crées vont pouvoir être aspirées vers l'admission du moteur.

L'huile 1 peut être réchauffée localement jusqu'à une température de l'ordre, par exemple, de 120 à 200 degrés, et de préférence 150 degrés environ.

La proportion seuil de carburant peut être de l'ordre de 3 à 8% en masse par rapport à la masse totale d'huile, et de préférence environ 5%.

Dans le cas où le moteur 4 effectue au moins une étape de post-injection de carburant dans au moins certains des cylindres, la détermination de la proportion de carburant dans l'huile peut être calculée à partir de la mesure du temps de post-injection réalisé par le moteur.

Les moyens de détermination peuvent ainsi être constitués, par exemple, de moyens électroniques de traitement de données 9 tel qu'un calculateur et relié à un dispositif de mesure du temps de post injection 11 effectué par le moteur. Par exemple, les moyens de détermination 9 sont relié un calculateur moteur 11 qui gère le fonctionnement du moteur 4. Le calculateur moteur 11 indique aux moyens de détermination 9 la durée de post injection effectuée par le moteur 4.

La proportion de gazole contenue dans le liquide de lubrification est calculée de préférence par la formule suivante : Pg = αTp, dans laquelle Pg est le pourcentage de gazole en masse par rapport à la masse totale d'huile, α un coefficient multiplicatif constant et environ égal à 0,02; et Tp est le temps de post-injection effectuée par le moteur mesuré en minute au cours d'un cycle de fonctionnement du moteur.

Le temps de post-injection est fonction de divers paramètres tels que la vitesse et la charge du véhicule, la température extérieure au véhicule, la température et le taux d'encrassement du filtre à particule.

Ainsi, lorsque le calculateur 9 estime la proportion de gazole dans l'huile est supérieure à la proportion seuil, il commande la mise en marche des moyens 10 de chauffage de l'huile. Des moyens de mesure de la température de l'huile (non représentés) peuvent être prévus pour arrêter le réchauffage de l'huile lorsque cette dernière dépasse une température limite de l'ordre, par exemple, de 230 degrés.

Les moyens de réchauffage 8 de l'huile peuvent comprendre, par exemple, au moins une résistance chauffante disposée dans le bac à huile, ou tout autre système équivalent.

En variante, les moyens de détermination de la proportion de carburant dans l'huile peuvent comprendre une sonde ou capteur 10 disposée dans le bac 2 à huile et apte à mesurer la quantité de gazole présent dans le l'huile de lubrification. Le capteur ou la sonde peut être, par exemple, un capteur capacitif ou un capteur mesurant la viscosité du liquide de lubrification.

On conçoit donc aisément que le dispositif selon l'invention, tout étant de srtucture simple, permet de limiter la proportion de gazole dans l'huile de lubrification d'un moteur.

Enfin, bien que l'invention ait été décrite en liaison avec des modes de réalisation particuliers, elle comprend tous les équivalents techniques des moyens décrits qui entrent dans le cadre de la portée des revendications indépendantes.

## Revendications

1. Procédé de lubrification des organes mécaniques d'un moteur Diesel de véhicule, consistant à pomper de l'huile (1) contenue dans un réservoir (2) pour la faire circuler dans un circuit (3) de lubrification du moteur (4) le procédé comportant une étape de chauffage de l'huile pour séparer le carburant de l'huile, **caractérisé en ce qu'**il comporte :
- une étape de détermination de la proportion de carburant contenu dans l'huile de lubrification (1) consistant <à mesurer la concentration dudit carburant dans l'huile (1),
- une étape de comparaison de la proportion déterminée de carburant avec une proportion seuil, et
- une étape de chauffage de l'huile de lubrification (1) lorsque la proportion déterminée de carburant est supérieure à la proportion seuil.

2. Procédé de lubrification selon la revendication 1, **caractérisé en ce que** l'étape de détermination de la proportion de carburant consiste à mesurer la concentration dudit carburant dans un bac à huile du moteur par un capteur capacitif ou un capteur mesurant la viscosité du fluide de lubrification.

3. Procédé de lubrification des organes mécaniques d'un moteur Diesel de véhicule, consistant à pomper de l'huile (1) contenue dans un réservoir (2) pour la faire circuler dans un circuit (3) de lubrification du moteur (4) le procédé comportant une étape de chauffage de l'huile pour séparer le carburant de l'huile, le moteur effectuant au moins une étape de post injection de carburant dans au moins certains des cylindres, **caractérisé en ce qu'**il comporte :
- une étape de détermination de la proportion de carburant contenu dans l'huile de lubrification (1), consistant à estimer la concentration dudit carburant dans l'huile (1) en fonction du temps mesuré de post injection
- une étape de comparaison de la proportion déterminée de carburant avec une proportion seuil, et
- une étape de chauffage de l'huile de lubrification (1) lorsque la proportion déterminée de carburant est supérieure à la proportion seuil.

4. Procédé de lubrification selon la revendication 3, **caractérisé en ce que** la proportion du carburant est estimée en fonction du temps mesuré de post injection selon la relation : Pg = aTp, dans lequel Pg est le pourcentage de gazole en masse par rapport à la masse totale d'huile, α un coefficient égal à environ 0,02, et Tp est le temps de post-injection effectuée par le moteur mesuré en minute au cours d'un cycle de fonctionnement du moteur.

5. Procédé de lubrification selon l'une quelconque des revendications 1 à 4, **caractérisé en ce que** la proportion seuil de carburant est de l'ordre de 3 à 8% en masse par rapport à la masse totale d'huile.

6. Procédé de lubrification selon l'une quelconque des revendications 1 à 5, **caractérisé en ce que** l'étape de réchauffage consiste à réchauffer l'huile (1) jusqu'à une température de l'ordre de 120 à 200 degrés environ.

7. Dispositif de lubrification des organes mécaniques d'un moteur Diesel de véhicule de mise en oeuvre du procédé conforme à l'une quelconque des revendications 1 à 6, comportant un bac à huile (2) des moyens d'aspiration (5, 6) de l'huile vers un circuit (3) de lubrification, des moyens (8) de chauffage de l'huile (1), **caractérisé en ce qu'**il comporte des moyens (9, 10, 11) de détermination de la proportion de carburant contenu dans l'huile de lubrification (1) comportant au moins un capteur (10) de mesure de la quantité de carburant contenue dans l'huile (1) relié à des moyens (9) électroniques de traitement de données, des moyens (9) de comparaison de la proportion déterminée de carburant avec une proportion seuil déterminée, et des moyens de commande (9) des moyens de chauffage (8) assurant le chauffage de l'huile de lubrification (1) lorsque la proportion déterminée de carburant est supérieure à la proportion seuil.

8. Dispositif de lubrification des organes mécaniques d'un moteur Diesel de véhicule de mise en oeuvre du procédé conforme à l'une quelconque des revendications 1 à 6, le moteur (4) effectuant au moins une étape de post-injection de carburant dans au moins certains des cylindres et comportant un bac à huile (2) des moyens d'aspiration (5, 6) de l'huile vers un circuit (3) de lubrification, des moyens (8) de chauffage de l'huile (1), **caractérisé en ce qu'**il comporte des moyens (9, 10, 11) de détermination de la proportion de carburant contenu dans l'huile de lubrification (1) comportent des moyens (11) de mesure du temps de post injection et des moyens (9) électroniques de traitement de données assurant le calcul de la proportion de carburant contenue dans l'huile (1) en fonction du temps mesuré de post-injection, des moyens (9) de comparaison de la proportion déterminée de carburant avec une proportion seuil déterminée, et des moyens de commande (9) des moyens de chauffage (8) assurant le chauffage de l'huile de lubrification (1) lorsque la proportion déterminée de carburant est supérieure à la proportion seuil.

9. Dispositif de lubrification selon l'une quelconque des revendications 7 ou 8, **caractérisé en ce que** les moyens de chauffage comportent au moins un système du type résistance thermique (8).

## Patentansprüche

1. Verfahren zum Schmieren der mechanischen Organe eines Dieselmotors für ein Fahrzeug, das darin besteht, Öl (1) aus einem Behälter (2) zu pumpen, damit es in einem Schmierkreislauf (3) des Motors (4) zirkuliert, wobei das Verfahren einen Schritt des Erhitzens des Öls aufweist, um den Kraftstoff vom Öl zu trennen, **dadurch gekennzeichnet, dass** es Folgendes aufweist:
- einen Schritt, in dem der im Schmieröl (1) enthaltene Kraftstoffanteil ermittelt wird und der darin besteht, die Konzentration des Kraftstoffs im Öl (1) zu messen,
- einen Schritt, in dem der ermittelte Kraftstoffanteil mit einem Grenzwert verglichen wird, und
- einen Schritt, in dem das Schmieröl (1) erhitzt wird, wenn der ermittelte Kraftstoffanteil den Grenzwert übersteigt.

2. Schmierverfahren nach Anspruch 1, **dadurch gekennzeichnet, dass** der Schritt des Ermittelns des Kraftstoffanteils darin besteht, die Konzentration des Kraftstoffs in einem Ölbehälter des Motors mit einem kapazitiven Sensor oder einem Sensor zu messen, der die Viskosität der Schmierflüssigkeit erfasst.

3. Verfahren zum Schmieren der mechanischen Organe eines Dieselmotors für ein Fahrzeug, das darin besteht, Öl (1) aus einem Behälter (2) zu pumpen, damit es in einem Schmierkreislauf (3) des Motors (4) zirkuliert, wobei das Verfahren einen Schritt des Erhitzens des Öls aufweist, um den Kraftstoff vom Öl zu trennen, wobei der Motor mindestens einen Schritt der Nacheinspritzung von Kraftstoff zumindest in bestimmten Zylindern durchführt, **dadurch gekennzeichnet, dass** es Folgendes aufweist:
- einen Schritt, in dem der im Schmieröl (1) enthaltene Kraftstoffanteil ermittelt wird und der darin besteht, die Konzentration des Kraftstoffs im Öl (1) in Abhängigkeit von der gemessenen Nacheinspritzzeit zu berechnen,
- einen Schritt, in dem der ermittelte Kraftstoffanteil mit einem Grenzwert verglichen wird, und
- einen Schritt, in dem das Schmieröl (1) erhitzt wird, wenn der ermittelte Kraftstoffanteil den Grenzwert übersteigt.

4. Schmierverfahren nach Anspruch 3, **dadurch gekennzeichnet, dass** der Kraftstoffanteil in Abhängigkeit von der gemessenen Nacheinspritzzeit nach der Formel Pg = αTp berechnet wird, bei der Pg dem Massenanteil von Diesel gegenüber der Gesamtmasse an Öl, α einem Koeffizienten von ungefähr 0,02 und Tp der in Minuten gemessenen Zeit der vom Motor durchgeführten Nacheinspritzung während eines Funktionszyklus des Motors entspricht.

5. Schmierverfahren nach einem der Ansprüche 1 bis 4, **dadurch gekennzeichnet, dass** der Grenzwert für den Kraftstoffanteil in der Größenordnung von 3 bis 8 Massenprozent gegenüber der Gesamtmasse an Öl liegt.

6. Schmierverfahren nach einem der Ansprüche 1 bis 5, **dadurch gekennzeichnet, dass** der Schritt des Erhitzens darin besteht, das Öl (1) auf eine Temperatur in der Größenordnung von ungefähr 120 bis 200 Grad zu erhitzen.

7. Vorrichtung zum Schmieren der mechanischen Organe eines Dieselmotors für ein Fahrzeug, welche das Verfahren nach einem der Ansprüche 1 bis 6 einsetzt und einen Ölbehälter (2), Mittel (5, 6) zum Ansaugen des Öls zu einem Schmierkreislauf (3) und Mittel (8) zum Erhitzen des Öls (1) aufweist, **dadurch gekennzeichnet, dass** sie Mittel (9, 10, 11) zum Ermitteln des im Schmieröl (1) enthaltenen Kraftstoffanteils mit mindestens einem Sensor (10) zum Messen der im Öl (1) enthaltenen Kraftstoffmenge aufweist, der mit einer EDV-Einrichtung (9), Mitteln zum Vergleichen des ermittelten Anteils und Mitteln (9) zum Steuern der Heizmittel (8) verbunden ist, welche das Schmieröl (1) erhitzen, wenn der ermittelte Kraftstoffanteil den Grenzwert übersteigt.

8. Vorrichtung zum Schmieren der mechanischen Organe eines Dieselmotors für ein Fahrzeug, die das Verfahren nach einem der Ansprüche 1 bis 6 einsetzt, wobei der Motor mindestens einen Schritt der Nacheinspritzung von Kraftstoff zumindest in bestimmten Zylindern durchführt, mit einem Ölbehälter (2), mit Mitteln (5, 6) zum Ansaugen des Öls zu einem Schmierkreislauf (3), mit Mitteln (8) zum Erhitzen des Öls (1), **dadurch gekennzeichnet, dass** sie Mittel (9, 10, 11) zum Ermitteln des im Schmieröl (1) enthaltenen Kraftstoffanteils aufweist, die Mittel (11) zum Messen der Dauer der Nacheinspritzung und eine EDV-Einrichtung (9) umfassen, die den im Öl (1) enthaltenen Kraftstoffanteil in Abhängigkeit von der gemessenen Dauer der Nacheinspritzung berechnet, sowie Mittel (9), die den ermittelten Anteil vergleichen und Mittel (9) zum Steuern der Heizmittel (8), welche das Schmieröl (1) erhitzen, wenn der ermittelte Kraftstoffanteil den Grenzwert übersteigt.

9. Schmiervorrichtung nach einem der Ansprüche 7 oder 8, **dadurch gekennzeichnet, dass** die Heizmittel mindestens ein System von der Art eines Wärmewiderstands (8) aufweisen.

## Claims

1. Method of lubricating the mechanical components of a diesel engine of a vehicle, consisting in pumping the oil (1) contained in a tank (2) in order to circulate it in a lubrication circuit (3) of the engine (4), the method comprising a step of heating the oil to separate the fuel from the oil, **characterised in that** it comprises:
- a step of determining the proportion of fuel contained in the lubrication oil (1) consisting in measuring the concentration of said fuel in the oil (1),
- a step of comparing the predetermined proportion of fuel with a threshold proportion, and
- a step of heating of the lubrication oil (1) when the predetermined proportion of fuel is greater than the threshold proportion.

2. Lubrication method according to Claim 1, **characterised in that** the step of determining the proportion of fuel consists in measuring the concentration of said fuel in an oil basin of the engine by a capacitive sensor or a sensor measuring the viscosity of the lubrication fluid.

3. Method of lubricating the mechanical components of a diesel engine of a vehicle, consisting in pumping the oil (1) contained in a tank (2) in order to circulate it in a lubrication circuit (3) of the engine (4), the method comprising a step of heating the oil in order to separate the fuel from the oil, the engine performing at least one step of post injection of fuel into at least some of the cylinders, **characterised in that** it comprises:
- a step of determining the proportion of fuel contained in the lubrication oil (1) consisting in estimating the concentration of said fuel in the oil (1) as a function of the measured post-injection time,
- a step of comparing the predetermined proportion of fuel with a threshold proportion, and
- a step of heating the lubrication oil (1) when the predetermined proportion of fuel is greater than the threshold proportion.

4. Lubrication method according to Claim 3, **characterised in that** the proportion of the fuel is estimated as a function of the measured post-injection time according to the relationship: Pg = αTp, in which Pg is the percentage of diesel fuel by mass in relation to the total mass of oil, α a coefficient equal to approximately 0.02, and Tp is the post-injection time performed by the engine measured in minutes over one operating cycle of the engine.

5. Lubrication method according to any one of Claims 1 to 4, **characterised in that** the threshold proportion of fuel is of the order of 3 to 8% by mass relative to the total mass of oil.

6. Lubrication method according to any one of Claims 1 to 5, **characterised in that** the reheating step consists in reheating the oil (1) to a temperature of the order of approximately 120 to 200 degrees.

7. Device for lubricating the mechanical components of a diesel engine of a vehicle implementing the method in accordance with any one of Claims 1 to 6, comprising an oil basin (2) means (5, 6) for sucking the oil towards a lubrication circuit (3), means (8) for heating the oil (1), **characterised in that** it comprises means (9, 10, 11) for determining the proportion of fuel contained in the lubrication oil (1) comprising at least one sensor (10) for measuring the quantity of fuel contained in the oil (1) connected to electronic data-processing means (9), means (9) for comparing the predetermined proportion of fuel with a predetermined threshold proportion, and means (9) for controlling the heating means (8) ensuring the heating of the lubrication oil (1) when the predetermined proportion of fuel is greater than the threshold proportion.

8. Device for lubricating the mechanical components of a diesel engine of a vehicle implementing the method in accordance with any one of Claims 1 to 6, the engine (4) performing at least one step of post-injection of fuel into at least some of the cylinders and comprising an oil basin (2) means (5, 6) for sucking the oil towards a lubrication circuit (3), means (8) for heating the oil (1), **characterised in that** it comprises means (9, 10, 11) for determining the proportion of fuel contained in the lubrication oil (1) comprising means (11) for measuring the post-injection time and electronic data-processing means (9) ensuring the calculation of the proportion of fuel contained in the oil (1) as a function of the measured post-injection time, means (9) for comparing the predetermined proportion of fuel with a predetermined threshold proportion, and means for controlling (9) the heating means (8) ensuring the heating of the lubrication oil (1) when the predetermined proportion of fuel is greater than the threshold proportion.

9. Lubrication device according to any one of Claims 7 or 8, **characterised in that** the heating means comprise at least one system of the thermal resistance type (8).
